# EUROPÄISCHE PATENTSCHRIFT

(11) **EP 2 049 374 B1**
(45) Veröffentlichungstag und Bekanntmachung des Hinweises auf die Patenterteilung: **19.01.2011**
(21) Anmeldenummer: 06778164.1
(22) Anmeldetag: 03.08.2006
(51) Int. Cl.: B60T 8/40, B60T 7/04

(54) **BREMSBETÄTIGUNGSEINHEIT ZUR BETÄTIGUNG EINER KRAFTFAHRZEUGBREMSANLAGE**
BRAKE-ACTUATION UNIT FOR ACTUATION OF A MOTOR VEHICLE BRAKING SYSTEM
UNITÉ D'ACTIONNEMENT DE FREINS DESTINÉE À L'ACTIONNEMENT D'UN SYSTÈME DE FREINAGE DE VÉHICULE À MOTEUR

(43) Veröffentlichungstag der Anmeldung: 22.04.2009
(73) Patentinhaber: Continental Teves AG & Co. oHG, 60488 Frankfurt (DE)
(72) Erfinder: VON HAYN, Holger, 61118 Bad Vilbel (DE); SCHONLAU, Jürgen, 65396 Walluf (DE); RÜFFER, Manfred, 65843 Sulzbach (DE); SELLINGER, Thomas, D-63073 Offenbach (DE); QUEISSER, Torsten, D- 02708 Obercunnersdorf (DE); MILISIC, Lasar, D-65779 Kelkheim (DE)
(86) Internationale Anmeldenummer: PCT/EP2006/065032
(87) Internationale Veröffentlichungsnummer: WO 2008/014823

(56) Entgegenhaltungen:
- DE-A1- 10 223 799
- DE-A1- 19 640 781
- DE-A1-102004 023 852
- DE-A1-102005 049 394

## Beschreibung

Die Erfindung betrifft eine Bremsbetätigungseinheit zur Betätigung einer Kraftfahrzeugbremsanlage vom Typ "Brake-by-wire", die aus
- einem sowohl mittels eines auf einer Welle gelagerten Bremspedals als auch mittels einer elektronischen Steuereinheit fahrerwunschabhängig betätigbaren Bremskraftverstärker, wobei Mittel zur Entkopplung einer kraftübertragenden Verbindung zwischen dem Bremspedal und dem Bremskraftverstärker in der Betriebsart "Brake-by-wire" vorgesehen sind,
- Mitteln zum Erfassen eines Fahrerverzögerungswunsches,
- sowie einem mit dem Bremspedal zusammenwirkenden Pedalwegsimulator besteht, durch den in der Betriebsart "Brake-by-wire" eine auf das Bremspedal wirkende Rückstellkraft unabhängig von einer Betätigung des Bremskraftverstärkers simulierbar ist und der in der Betriebsart "Brake-by-wire" bei der Entkopplung der kraftübertragenden Verbindung zwischen dem Bremspedal und dem Bremskraftverstärker zuschaltbar und außerhalb der Betriebsart "Brake-by-wire" abschaltbar ist, wobei der Pedalwegsimulator durch eine Simulatorfeder gebildet ist, die wirkungsmäßig zwischen einem mit dem Bremspedal verbundenen Kraftübertragungsteil und einem Simulatorgehäuse angeordnet ist, das das mittels zweier Lager auf der Welle gelagert ist.

Eine derartige Betätigungseinheit ist aus der DE 10 2005 049 394 A1 bekannt. Um dem Fahrzeugführer ein bekanntes Bremspedalgefühl zu vermitteln sieht die vorbekannte Betätigungseinheit eine Simulatorfeder vor, die als eine Flachbiegefeder ausgebildet ist. Zusätzlich sind Mittel zur Erzeugung einer Hysterese vorgesehen. Der genannten Veröffentlichung sind jedoch keine Hinweise auf die Lagerung des Simulatorgehäuses auf der Bremspedalwelle zu entnehmen. Dabei ist es denkbar, bei einer Ausführung des Pedalwegsimulators, der im wesentlichen aus einem Simulatorgehäuse und zwei das Gehäuse verschließenden Gehäusedeckeln besteht, die Lagerstellen jeweils in den zwei Simulatorgehäusedeckeln, also in zwei unterschiedlichen Bauteilen, anzuordnen. Aufgrund von Fertigungstoleranzen und Abweichungen in der Positionierung der relevanten Teile treten an den Lagerstellen und im gesamten Pedalwegsimulator Verspannungen auf.

Es ist daher Aufgabe der vorliegenden Erfindung, eine Betätigungseinheit der eingangs genannten Gattung weiter zu entwickeln, bei der die bei der Betätigung des Pedalwegsimulators auftretenden Kräfte weitgehend reduziert werden können. Außerdem soll die Anzahl der für das Simulatorgehäuse erforderlichen Bauteile reduziert werden.

Diese Aufgabe wird erfindungsgemäß dadurch gelöst, dass das Simulatorgehäuse einen zylindrischen Bereich zur Aufnahme der beiden Lager aufweist. Durch diese Maßnahme wird die Lagerung des Simulatorgehäuses optimiert.

Bei einer vorteilhaften Weiterbildung ist vorgesehen, dass die Simulatorfeder als eine Flachbiegefeder ausgebildet ist, die den zylindrischen Bereich teilweise umgreift.
Durch diese Maßnahmen kann das Gehäuse des Pedalwegsimulators wesentlich kleiner ausgebildet werden und besser an die beschränkten Bauraumverhältnisse angepasst werden.

Bei einer anderen vorteilhaften Weiterbildung des Erfindungsgegenstandes erfolgt die Kraftübertragung zwischen dem Bremspedal und dem Pedalwegsimulator über ein Reibglied, das zum Erzeugen einer Hysterese mit einer im Simulatorgehäuse angeordneten Reibfläche zusammenwirkt und in dem ein Ende der Simulatorfeder gelagert ist.

Eine andere besonders vorteilhafte Ausführung des Erfindungsgegenstandes besteht darin, dass ein komprimierbares Element zum Einstellen eines progressiven Verlaufs der Bremspedalkennlinie vorgesehen ist, mit dem das Reibglied nach dem Zurücklegen eines vorgegebenen Abstands in Eingriff bringbar ist.

Das komprimierbare Element ist dabei vorzugsweise an einem Halteteil angeordnet, das das im Simulatorgehäuse im Sinne der Einstellung des Abstands zwischen dem komprimierbaren Element und dem Reibglied verstellbar ist.

Eine weitere vorteilhafte Ausführung sieht vor, dass das komprimierbare Element an einem Halteteil angeordnet ist, das das andere Ende der Simulatorfeder aufnimmt und das im Simulatorgehäuse im Sinne der Einstellung der Kraft der Simulatorfeder sowie des Abstands zwischen dem komprimierbaren Element und dem Reibglied verstellbar ist.

Weitere Merkmale und Vorteile der Erfindung werden in der nachfolgenden Beschreibung unter Bezugnahme auf die beiliegenden Zeichnungen an einem Ausführungsbeispiel näher erläutert. In den Zeichnungen zeigen:
- Fig. 1: eine Ausführung der erfindungsgemäßen Bremsbetätigungseinheit in vereinfachter Teilschnittdarstellung;
- Fig. 2: die Lagerung des in Fig. 1 dargestellten Pedalwegsimulators in Teilschnittdarstellung;
- Fig. 3: eine andere Ausführungsform des Pedalwegsimulators in Schnittdarstellung;
- Fig. 4: eine weitere Ausführungsform des Pedalwegsimulators in Schnittdarstellung; und
- Fig. 5: eine vierte Ausführungsform des Pedalwegsimulators in Schnittdarstellung.

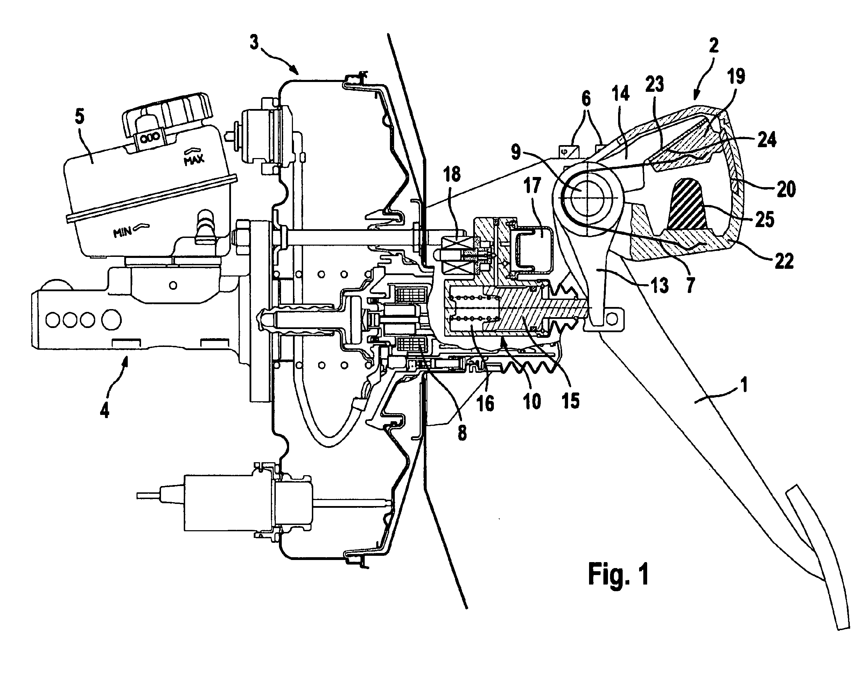

Die in Fig. 1 in einer Teilschnittdarstellung gezeigte Bremsbetätigungseinheit zur Betätigung einer Kraftfahrzeugbremsanlage vom Typ "Brake-by-wire" besteht im Wesentlichen aus einem Bremskraftverstärker, vorzugsweise einem Unterdruckbremskraftverstärker 3, einem dem Bremskraftverstärker 3 nachgeschalteten Hauptbremszylinder, vorzugsweise einem Tandemhauptzylinder 4, an dessen nicht dargestellte Druckräume nicht gezeigte Radbremsen eines Kraftfahrzeugs angeschlossen sind, einem dem Hauptbremszylinder 4 zugeordneten Druckmittelvorratsbehälter 5, einem Bremspedal 1 zur Betätigung des Bremskraftverstärkers 3 durch den Fahrer, einem mit dem Bremspedal 1 insbesondere in der Betriebsart "Brake-by-wire" zusammenwirkenden Pedalwegsimulator 2, der dem Fahrer das gewöhnliche Bremspedalgefühl vermittelt, mindestens einer Sensoreinrichtung 6 zur Erfassung eines Fahrerverzögerungswunsches, sowie einer nicht dargestellten elektronischen Steuereinheit, durch deren Ausgangssignale u. a. ein dem Bremskraftverstärker 3 zugeordneter Elektromagnet 8 ansteuerbar ist, der eine vom Fahrerwillen unabhängige Betätigung eines pneumatischen Steuerventils ermöglicht, das eine Luftzufuhr zum Bremskraftverstärker 3 steuert. Zwischen dem Ende einer mit dem Bremspedal 1 gekoppelten Kolbenstange und einem Steuerkolben des vorhin genannten Steuerventils ist ein axialer Spalt vorgesehen, der eine Entkopplung der kraftübertragenden Verbindung zwischen dem Bremspedal 1 und dem Bremskraftverstärker 3 in der Betriebsart "Brake-by-wire" gewährleistet. Der Pedalwegsimulator 2, durch den, wie bereits erwähnt, in der Betriebsart "Brake-by-wire" eine auf das Bremspedal wirkende Rückstellkraft unabhängig von einer Betätigung des Bremskraftverstärkers 3 simulierbar ist, ist derart ausgeführt, dass er in der Betriebsart "Brake-by-wire" bei der Entkopplung der kraftübertragenden Verbindung zwischen dem Bremspedal 1 und dem Bremskraftverstärker 3 zuschaltbar und außerhalb der Betriebsart "Brake-by-wire" abschaltbar ist. Die Betätigung des Pedalwegsimulators 2 erfolgt mittels eines am Bremspedal 1 angelenkten Kraftübertragungsteils 14. Das Zu- sowie das Abschalten des Pedalwegsimulators 2 erfolgt bei der gezeigten Ausführung durch eine hydraulische Kolben-Zylinderanordnung 10, auf die nachfolgend noch näher eingegangen wird.

Bei der in Fig. 1 dargestellten Ausführung ist der Pedalwegsimulator durch eine Simulatorfeder 7 gebildet, die zwischen dem mit dem Bremspedal 1 verbundenen Kraftübertragungsteils 14 und dem Gehäuse 22 des Pedalwegsimulators 2 eingespannt ist. Mit dem Gehäuse 22 ist ein Arm 13 verbunden, der sich an der eben erwähnten Kolben-Zylinder-Einheit 10 abstützt. Der Druckraum 16 dieser Kolben-Zylinderanordnung 10 ist mittels einer hydraulischen Verbindung an einen hydraulischen Niederdruckspeicher 17 angeschlossen. In der hydraulischen Verbindung ist, ein elektromagnetisch betätigbares Ventil 18 eingefügt, das ein Absperren der erwähnten Verbindung ermöglicht. In der Betriebsart "Brake-by-wire" ist das Ventil 18 geschlossen, sodass sich weder der Arm 13 noch das Gehäuse 22 des Pedalsimulators bewegen können. Bei einer Betätigung des Bremspedals 1 durch den Fahrzeugführer wird daher die Simulatorfeder 7 komprimiert. Außerhalb der Betriebsart "Brake-by-wire" ist das Ventil 18 geöffnet und bei einer Betätigung des Bremspedals 1 dreht sich das Simulatorgehäuse 22 mit dem Bremspedal 1 mit, sodass die vom Fahrzeugführer eingeleitete Kraft nicht im Pedalwegsimulator 2 absorbiert wird, sondern auf den Unterdruckbremskraftverstärker 3 wirkt.

Zur Erzeugung einer Hysterese, die bei steigendem Hub des Pedalwegsimulators 2 zusätzlich zur Kraft der Simulatorfeder 7 Reibkräfte erzeugt, die der am Bremspedal 1 wirkenden Betätigungskraft entgegen wirken, liegt an dem Kraftübertragungsteil 14 unter der Wirkung der Simulatorfeder 7 ein Reibglied 19 an, das ein Ende der Simulatorfeder 7 aufnimmt. Das Reibglied 19 wirkt mit einer Reibfläche 20 zusammen. Die Anlage des Reibglieds 19 am Kraftübertragungsteil 14 erfolgt mittels schräg angeordneter Anlageflächen 23, 24 derart, dass bei der Betätigung des Pedalwegsimulators 2 eine Kraftkomponente entsteht, die das Reibglied 19 gegen die Reibfläche 20 drückt. Der Einstellung eines progressiven Verlaufs der Kraft-Weg-Kennlinie des Bremspedals 1 dient ein elastisches, komprimierbares Element 25, mit dem das Reibglied 19 in Eingriff bringbar ist.

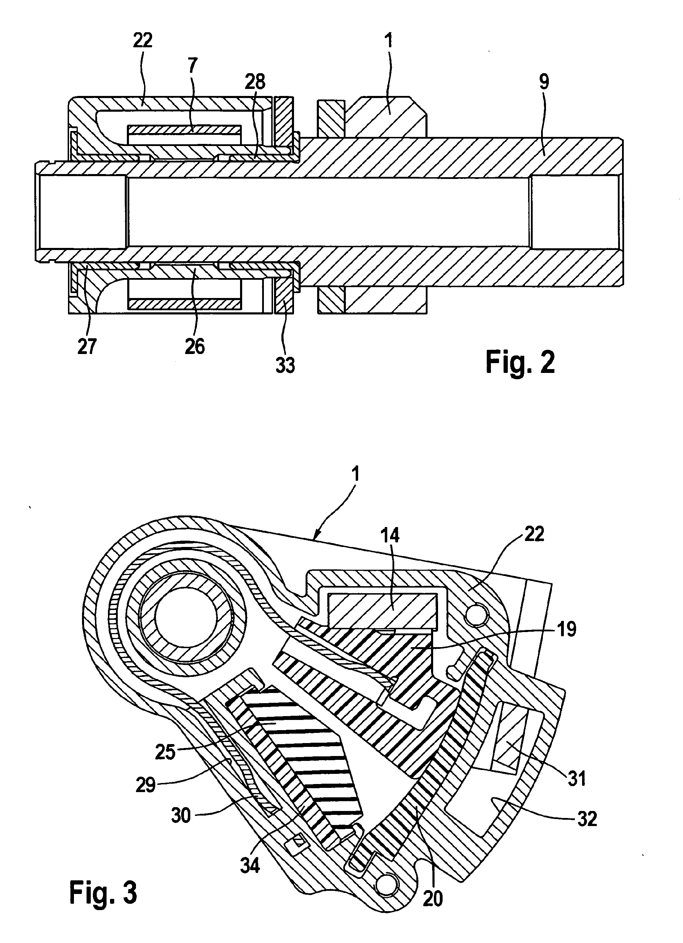

Wie insbesondere in Fig. 2 zu erkennen ist, dient der Lagerung des Bremspedals 1 sowie des Simulatorgehäuses 22 eine Welle, die mit dem Bezugszeichen 9 versehen ist. Zum Zweck der Lagerung des Simulatorgehäuses 22 weist dieses einen zylindrischen bzw. rohrförmigen Bereich 26 auf, der zwei in axialem Abstand voneinander angeordnete Lager 27, 28 aufnimmt. Durch die optimierte Lagerung des Simulatorgehäuses 22, bei der die Lager 27, 28 nur einem Bauteil zugeordnet sind, können sowohl Fertigungstoleranzen als auch Positionierungsabweichungen auf ein Minimum reduziert werden.

Bei der in Fig. 3 dargestellten Ausführung des erfindungsgemäßen Pedalwegsimulators 2 wird das zweite Ende 30 der Simulator- bzw. Flachbiegefeder 7 von einer Aussparung 29 im Simulatorgehäuse 22 aufgenommen. Außerdem ist am Bremspedal 1 ein Vorsprung 31 vorgesehen, der mit einer im radial äußeren Bereich des Simulatorgehäuses 22 ausgebildeten Ausnehmung 32 derart zusammenwirkt. Die Ausnehmung kann alternativ auch in einem nicht dargestellten Deckel ausgebildet sein, mit dem das Simulatorgehäuse 22 verschlossen wird und der in Fig. 2 mit dem Bezugszeichen 33 angedeutet ist. Das im Zusammenhang mit Fig. 1 erwähnte komprimierbare Element 25 ist auf einem Halteteil 34 angeordnet und wird im Simulatorgehäuse 22 mittels geeigneter Vorsprünge fest gehalten. Um den Abstand zwischen dem Reibelement 19 und dem komprimierbaren Element 25 einzustellen können nicht dargestellte Distanzstücke verwendet werden.

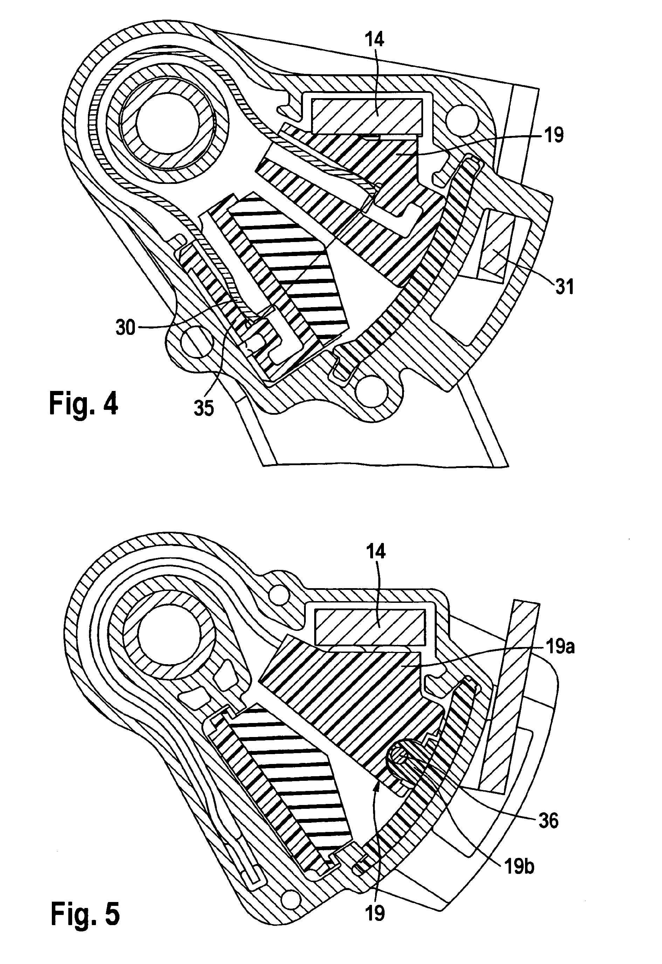

Der Aufbau der in Fig. 4 gezeigten anderen bevorzugten Ausführungsform des Pedalwegsimulators 2 entspricht im Wesentlichen dem der Ausführung gemäß Fig. 3. Das im Zusammenhang mit Fig. 3 erwähnte zweite Ende 30 der Simulator- bzw. Flachbiegefeder 7 wird jedoch von einem Halteteil 35 aufgenommen, dessen Position im Simulatorgehäuse 22 durch geeignete Mittel sowohl im Sinne der Änderung des Anstands zwischen dem Reibglied 19 und dem komprimierbaren Element 25 als auch im Sinne der Änderung der von der Simulatorfeder 7 aufgebrachten Federkraft einstellbar ist.

Bei der in Fig. 5 gezeigten vierten Ausführungsvariante entspricht die Anordnung der Simulator- bzw. der Flachbiegefeder 7 der Ausführung gemäß Fig. 3. Das oben erwähnte Reibglied 19 ist jedoch zweiteilig ausgeführt und besteht aus einem ersten Reibsegment 19a, das mit dem Kraftübertragungsteil 14 zusammen wirkt, sowie einem zweiten Reibsegment 19b, das vom ersten Reibsegment 19a entkoppelt, bzw. in diesem begrenzt drehbar gelagert ist. Die Lagerung des zweiten Reibsegmentes 19b erfolgt mittels eines Stiftes 36. Durch die Entkopplung der beiden Reibsegmente 19a, a voneinander wird ein Verkanten oder ein einseitiges Abnutzen der Reibflächen verhindert. Denkbar ist auch eine nicht gezeigte Anordnung, bei der das zweite Reibsegment im ersten Reibsegment mittels eines Kugelgelenkes gelagert ist. Diese Anordnung dient einem Toleranzausgleich in allen Richtungen.

## Patentansprüche

1. Bremsbetätigungseinheit zur Betätigung einer Kraftfahrzeugbremsanlage vom Typ "Brake-by-wire", die aus
• einem sowohl mittels eines auf einer Welle (9) gelagerten Bremspedals (1) als auch mittels einer elektronischen Steuereinheit fahrerwunschabhängig betätigbaren Bremskraftverstärker (3), wobei Mittel zur Entkopplung einer kraftübertragenden Verbindung zwischen dem Bremspedal (1) und dem Bremskraftverstärker (3) in der Betriebsart "Brake-by-wire" vorgesehen sind,
• Mitteln zum Erfassen eines Fahrerverzögerungswunsches (6),
• sowie einem mit dem Bremspedal (1) zusammenwirkenden Pedalwegsimulator (2) besteht, durch den in der Betriebsart "Brake-by-wire" eine auf das Bremspedal (1) wirkende Rückstellkraft unabhängig von einer Betätigung des Bremskraftverstärkers (3) simulierbar ist und der in der Betriebsart "Brake-by-wire" bei der Entkopplung der kraftübertragenden Verbindung zwischen dem Bremspedal (1) und dem Bremskraftverstärker (3) zuschaltbar und außerhalb der Betriebsart "Brake-by-wire" abschaltbar ist,
wobei der Pedalwegsimulator (2) durch mindestens eine Simulatorfeder (7) gebildet ist, die wirkungsmäßig zwischen einem mit dem Bremspedal (1) verbundenen Kraftübertragungsteil (14) und einem Simulatorgehäuse (22) angeordnet ist, das mittels zweier Lager (27,28) auf der Welle gelagert ist, **dadurch gekennzeichnet, dass** das Simulatorgehäuse (22) einen zylindrischen Bereich (26) zur Aufnahme der beiden Lager (27, 28) aufweist.

2. Bremsbetätigungseinheit nach Anspruch 1, **dadurch gekennzeichnet, dass** die Simulatorfeder (7) als eine Flachbiegefeder ausgebildet ist, die den zylindrischen Bereich (26) teilweise umgreift.

3. Bremsbetätigungseinheit nach Anspruch 1 oder 2, **dadurch gekennzeichnet, dass** die Kraftübertragung zwischen dem Bremspedal (1) und der Simulatorfeder (7) über ein Reibglied (19) erfolgt, das zum Erzeugen einer Hysterese mit einer im Simulatorgehäuse (22) angeordneten Reibfläche (20) zusammenwirkt und in dem ein Ende der Simulatorfeder.(7) gelagert ist.

4. Bremsbetätigungseinheit nach Anspruch 1, 2 oder 3, **dadurch gekennzeichnet, dass** ein komprimierbares Element (25) zum Einstellen eines progressiven Verlaufs der Bremspedalkennlinie vorgesehen ist, mit dem das Reibglied (19) nach dem Zurücklegen eines vorgegebenen Abstands in Eingriff bringbar ist.

5. Bremsbetätigungseinheit nach Anspruch 4, **dadurch gekennzeichnet, dass** das komprimierbare Element (25) an einem Halteteil (34) angeordnet ist, das im Simulatorgehäuse (22) im Sinne der Einstellung des Abstands zwischen dem komprimierbaren Element (25) und dem Reibglied (19) verstellbar ist.

6. Bremsbetätigungseinheit nach Anspruch 4, **dadurch gekennzeichnet, dass** das komprimierbare Element (25) an einem Halteteil (35) angeordnet ist, das das andere Ende (30) der Simulatorfeder (7) aufnimmt und das im Simulatorgehäuse (22) im Sinne der Einstellung der Kraft der Simulatorfeder (7) sowie des Abstands zwischen dem komprimierbaren Element (25) und dem Reibglied (19) verstellbar ist.

7. Bremsbetätigungseinheit nach einem der vorhergehenden Ansprüche **dadurch gekennzeichnet, dass** im äußeren Bereich des Simulatorgehäuses (22) oder eines Simulatorgehäusedeckels ein Anschlag (32) ausgebildet ist, der mit einem am Bremspedal (1) vorgesehenen Anschlagelement (31) im Sinne der Begrenzung des Bremspedalbetätigungsweges zusammenwirkt.

8. Bremsbetätigungseinheit nach einem der vorhergehenden Ansprüche 3 bis 7 **dadurch gekennzeichnet, dass** das Reibglied (19) zweiteilig ausgebildet ist und aus einem mit dem Kraftübertragungsteil (14) zusammenwirkenden ersten Reibsegment (19a) sowie einem vom ersten Reibsegment (19a) entkoppelten, im ersten Reibsegment (19a) begrenzt drehbar gelagerten zweiten Reibsegment (19b) besteht.

9. Bremsbetätigungseinheit nach Anspruch 8 **dadurch gekennzeichnet, dass** das zweite Reibsegment im ersten Reibsegment mittels eines Kugelgelenkes gelagert ist.

## Claims

1. Brake actuating unit for actuating a motor vehicle brake of the brake-by-wire type, comprising
• a brake booster (3) which can be actuated as a function of driver demand both by means of a brake pedal (1) mounted on a shaft (9) and also by means of an electronic control unit, with means being provided for decoupling a force-transmitting connection between the brake pedal (1) and the brake booster (3) in the brake-by-wire operating mode,
• means for detecting a driver deceleration demand (6),
• and a pedal travel simulator (2) which interacts with the brake pedal (1) and by means of which, in the brake-by-wire operating mode, a restoring force acting on the brake pedal (1) can be simulated independently of an actuation of the brake booster (3) and which can be activated in the brake-by-wire operating mode when the force-transmitting connection between the brake pedal (1) and the brake booster (3) is decoupled and which can be deactivated outside the brake-by-wire operating mode,
with the pedal travel simulator (2) being formed by at least one simulator spring (7) which is arranged so as to act between a force-transmitting part (14), which is connected to the brake pedal (1), and a simulator housing (22) which is mounted on the shaft by means of two bearings (27, 28), **characterized in that** the simulator housing (22) has a cylindrical region (26) for holding the two bearings (27, 28).

2. Brake actuating unit according to Claim 1, **characterized in that** the simulator spring (7) is designed as a flat flexural spring which engages partially around the cylindrical region (26).

3. Brake actuating unit according to Claim 1 or 2, **characterized in that** the force transmission between the brake pedal (1) and the simulator spring (7) takes place via a friction element (19) which interacts with a friction surface (20) arranged in the simulator housing (22) in order to generate a hysteresis and in which one end of the simulator spring (7) is mounted.

4. Brake actuating unit according to Claim 1, 2 or 3, **characterized in that** a compressible element (25) is provided for setting a progressive profile of the brake pedal characteristic curve, with which compressible element the friction element (19) can engage after a predefined distance is covered.

5. Brake actuating unit according to Claim 4, **characterized in that** the compressible element (25) is arranged on a holding part (34) which is adjustable in the simulator housing (22) for the purpose of setting the distance between the compressible element (25) and the friction element (19).

6. Brake actuating unit according to Claim 4, **characterized in that** the compressible element (25) is arranged on a holding part (35) which holds the other end (30) of the simulator spring (7) and which is adjustable in the simulator housing (22) for the purpose of setting the force of the simulator spring (7) and the distance between the compressible element (25) and the friction element (19).

7. Brake actuating unit according to one of the preceding claims, **characterized in that** a stop (32) is formed in the outer region of the simulator housing (22) or of a simulator housing cover, which stop (32) interacts with a stop element (31), which is provided on the brake pedal (1), for the purpose of delimiting the brake pedal actuating travel.

8. Brake actuating unit according to one of the preceding Claims 3 to 7, **characterized in that** the friction element (19) is formed in two parts and is composed of a first friction segment (19a), which interacts with the force-transmitting part (14), and of a second friction segment (19b) which is decoupled from the first friction segment (19a) and which is mounted in the first friction segment (19a) so as to be rotatable to a limited extent.

9. Brake actuating unit according to Claim 8, **characterized in that** the second friction segment is mounted in the first friction segment by means of a ball joint.

## Revendications

1. Unité d'actionnement de frein qui actionne une installation de freinage de type "freinage par fil" d'un véhicule automobile, constitué de :
- un amplificateur (3) de force de freinage qui peut être actionné en fonction des souhaits du conducteur à la fois au moyen d'une pédale de frein (1) montée sur un arbre (9) et d'une unité électronique de commande, des moyens qui découplent une liaison de transfert de force entre la pédale de frein (1) et l'amplificateur (3) de force de freinage dans le mode de fonctionnement "freinage par fil",
- des moyens de détection d'un souhait (6) de ralentissement exprimé par le conducteur,
- ainsi qu'un simulateur (2) de course de pédale qui coopère avec la pédale de frein (1), par lequel, en mode "freinage par fil", une force de rappel qui agit sur la pédale de frein (1) peut être simulée indépendamment de l'actionnement de l'amplificateur (3) de force de freinage et qui peut être branché en mode de fonctionnement "freinage par fil", lorsque la liaison de transfert de force entre la pédale de frein (1) et l'amplificateur de force de freinage (3) est découplée, en étant débranché lorsque l'on ne se trouve pas dans le mode de fonctionnement "freinage par fil",
le simulateur (2) de course de pédale étant formé par au moins un ressort (7) de simulateur qui est disposé et agit entre une partie (14) de transfert de force reliée à la pédale de frein (1) et par un boîtier (22) du simulateur monté sur l'arbre au moyen de deux paliers (27, 28)
**caractérisée en ce que**
le boîtier (22) du simulateur présente une partie cylindrique (26) qui loge les deux paliers (27, 28).

2. Unité d'actionnement de frein selon la revendication 1, **caractérisée en ce que** le ressort (7) du simulateur est configuré comme ressort plat flexible qui entoure partiellement la partie cylindrique (26).

3. Unité d'actionnement de frein selon les revendications 1 ou 2, **caractérisée en ce que** le transfert de force entre la pédale de frein (1) et le ressort (7) du simulateur s'effectue par l'intermédiaire d'un organe de frottement (19) qui coopère avec une surface de frottement (20) disposée dans le boîtier (22) du simulateur pour former une hystérèse et qui est monté à une des extrémités du ressort (7) du simulateur.

4. Unité d'actionnement de frein selon les revendications 1, 2 ou 3, **caractérisée en ce qu'**un élément comprimable (25) est prévu pour établir une évolution progressive de la ligne caractéristique de la pédale de frein et avec lequel l'organe de frottement (19) peut être amené à s'engager après avoir parcouru une distance prédéterminée.

5. Unité d'actionnement de frein selon la revendication 4, **caractérisée en ce que** l'élément comprimable (25) est disposé sur une pièce de maintien (34) qui peut être ajustée dans le boîtier (22) du simulateur dans le sens de l'établissement d'une distance entre l'élément comprimable (25) et l'organe de frottement (19).

6. Unité d'actionnement de frein selon la revendication 4, **caractérisée en ce que** l'élément comprimable (25) est disposé sur une pièce de maintien (35) qui loge l'autre extrémité (30) du ressort (7) du simulateur et qui peut être ajustée dans le boîtier (22) du simulateur dans le sens de l'établissement de la force du ressort (7) du simulateur ainsi que de la distance entre l'élément comprimable (25) et l'organe de frottement (19).

7. Unité d'actionnement de frein selon l'une des revendications précédentes, **caractérisée en ce qu'**une butée (32) qui coopère avec un élément de butée (31) prévu sur la pédale de frein (1) en vue de limiter la course d'actionnement de la pédale de frein est formée dans la partie extérieure du boîtier (22) du simulateur ou d'un couvercle du boîtier du simulateur.

8. Unité d'actionnement de frein selon l'une des revendications 3 à 7 qui précèdent, **caractérisée en ce que** l'organe de frottement (19) est réalisé en deux pièces et est constitué d'un premier segment de frottement (19a) qui coopère avec la partie (14) de transfert de force ainsi que d'un deuxième segment de frottement (19b) découplé du premier segment de frottement (19a) et monté à rotation limitée dans le premier segment de frottement (19a).

9. Unité d'actionnement de frein selon la revendication 8, **caractérisée en ce que** le deuxième segment de frottement est monté à l'intérieur du premier segment de frottement au moyen d'une articulation sphérique.
